Europäisches Patentamt

European Patent Office

Office européen des brevets

(19)

(11) Publication number: **0 212 836 B1**

## (12) EUROPEAN PATENT SPECIFICATION

(45) Date of publication of patent specification:
13.03.91 Bulletin 91/11

(51) Int. Cl.⁵: **G01T 1/00**, G01T 1/202

(21) Application number: 86305390.6

(22) Date of filing: 14.07.86

(54) Radiation imaging systems.

(30) Priority: 29.08.85 US 770429

(43) Date of publication of application:
04.03.87 Bulletin 87/10

(45) Publication of the grant of the patent:
13.03.91 Bulletin 91/11

(84) Designated Contracting States:
DE FR GB NL

(56) References cited:
WO-A-81/00457
US-A- 4 511 799
PATENTS ABSTRACTS OF JAPAN, vol. 9, no.
68 (P-344)[1791], 28th March 1985; & JP-A-59
200 983 (TOSHIBA K.K.) 14-11-1984

(73) Proprietor: PICKER INTERNATIONAL, INC.
595 Miner Road
Highland Heights Ohio 44143 (US)

(72) Inventor: Brunnett, Carl J.
38725 Dodd's Landing
Willoughby Hills Ohio 44094 (US)
Inventor: Mattson, Rodney A.
6532 Melshore Drive
Mentor Ohio 44060 (US)

(74) Representative: Pope, Michael Bertram
Wingate
Central Patent Department Wembley Office
The General Electric Company, p.l.c. Hirst
Research Centre East Lane
Wembley Middlesex HA9 7PP (GB)

## Description

The present invention relates to radiation imaging systems e.g. for computed tomography imaging.

In both emission and transmission computed tomography, information concerning the internal structure of a subject of interest is obtained without invasive procedures.

In computed tomography a two dimensional image is generated from multiple one dimensional projections. A source of radiation, e.g. x-radiation, transmits x-rays through a subject of interest and the intensity of that radiation is monitored on an opposite side by one or more detectors, which are often single scintillation crystals each optically coupled to a different photodiode. If the source is moved about the patient and x-ray attenuation data is obtained from a number of directions, a computed tomography reconstruction process can be utilized to generate an image of the subject cross-section.

The x-ray tube radiation source used in computed tomography emits x-ray photons over polychromatic or continuous energy spectrum which extends from near zero in energy to a maximum which is determined by the voltage (kv) applied to the source. The performance and energy spectra of x-ray tubes is well understood and documented by those of ordinary skill in the relevant art.

The radiation detectors utilized in computed tomography each produce a signal proportional to the total x-ray energy absorbed by the detector. The lower energy x-ray photons striking a detector contribute a relatively small amount to the total output signal of the detector, whereas the higher energy photons incident on the detector produce correspondingly larger contributions to the output signal.

The low energy x-ray photons are more readily absorbed in the patient, while the high energy photons have a greater tendency to pass through the patient's body and to undergo less attenuation than do the low energy x-ray photons. Hence, the low energy radiation contains more contrast information defining the patient's internal body structure than does the high energy radiation, which more uniformly passes through the patient's body, as a result of less attenuation.

Therefore, the detector output signal is more a function of the high energy radiation, which carries relatively less contrast information, than it is a function of the lower energy radiation which is relatively rich in image information. Accordingly, the present detectors that employ a single energy sensitive element (e.g., a single scintillation crystal or a gas filled ion chamber) weights its output signal in favor of the less informative high energy radiation than in favor of the more informative low energy radiation.

The generation of x-ray photons by an x-ray tube anode is a random process. Even where the x-ray tube kV and mA (voltage and current) are held constant, the number of photons emitted from the anode fluctuates statistically in time about an average value with a Poisson probability distribution. The absorption, or attenuation, of the x-ray photons in matter, such as in a patient's body, is also a random process following similar laws of probability theory. Therefore, the number of photons detected during a fixed time period, with all other conditions held constant, will vary from one measurement to the next. This statistical fluctuation in the measurement gives rise to an uncertainty or ambiguity in the true value of the attenuation. This ambiguity is sometimes referred to as "quantum noise" or "quantum statistics". While this quantum noise sets an absolute, or fundamental limit on the quality of an image that can ultimately be obtained, unequal response by the detector to photons of different energies magnifies this noise problem.

Noise in the detector output signal which results from the quantum statistics associated with the detection of N x-ray photons is given by the following relation :

$$\sigma = \sqrt{\dfrac{\sum\limits_{n=1}^{N} (W_n)^2}{\sum\limits_{n=1}^{N} (W_n)}}$$

where :

$\sigma$ = the standard deviation (or RMS noise) of the output signal, expressed as a fraction of the signal (i.e., noise to signal ratio) ;

$W_n$ = Weight (or signal contribution) of the $n^{th}$ photon, and

N = Total number of photons detected.

In most present detection systems used in computed tomography, W is proportional to the absorbed energy of the photon. However, less noise (or σ) is obtained if $W_n$ is constant (i.e., every photon is weighted equally). In this optimum case, the standard deviation is given by the familiar formula :

$$\sigma = \frac{1}{\sqrt{N}}$$

To illustrate with an example, consider two cases :

Case I. (Unequal Weighting)

Let N = 100 and assume that half of the detected photons have a relative weighting of W, and the other half are higher in energy and have a relative weighting of 4W, then

$$\sigma = \frac{\sqrt{\sum_{n=1}^{N/2} W^2 + \sum_{n=1}^{N/2} (4W)^2}}{\sum_{n=1}^{N/2} W + \sum_{n=1}^{N/2} (4W)} = \frac{\sqrt{50W^2 + 800W^2}}{50W + 200W} = .117$$

Case II. (Equal Weighting) Let N = 100 and assume that all photons are detected with relative weighting of W ; then

$$\sigma = \frac{\sqrt{\sum_{n=1}^{N} W^2}}{\sum_{n=1}^{N} W} = \frac{\sqrt{100\ W^2}}{100\ W} = 0.100$$

As can be seen in this set of examples, Case I is 17% noisier than Case II. In order for Case I to achieve the reduced level of noise of Case II, the number of detected photons, i.e., N, would have to be increased to 136. This would correspond to an increase in patient dose of 36%.

Thus, the characteristic of present detectors to weight, their response to high energy photons more heavily than to low energy photons results in an exaggerated effect of noise in the output signal, and, in order to compensate for this noise, requires a larger x-ray dose to be applied to the subject.

It is an object of this invention to provide an apparatus wherein this difficulty is alleviated.

According to a first aspect of the present invention there is provided a radiation imaging system comprising: a radiation source for propagating radiation along a path ; a detector assembly in said radiation path for producing an analog output signal in response to said radiation, said detector assembly comprising first and second scintillator components preferentially responsive to lower and higher energy components of said radiation respectively and a detector component for producing said output signal in response to the responses of said first and second scintillator components to said radiation ; and imaging circuitry responsive to said output signal, said first and second scintillator detector assembly components comprising scintillation material and said detector component comprising a detector for scintillation produced by said material, said first and second scintillator detector assembly components being arranged serially along said radiation path with said first scintillator detector assembly component nearer said source and having a higher photon to light conversion efficiency than said second scintillator detector assembly component, characterised in that said detector component is disposed along said radiation path between said first scintillator component and said source thereby to enhance a component of said output signal produced in response to a lower energy component of said radiation.

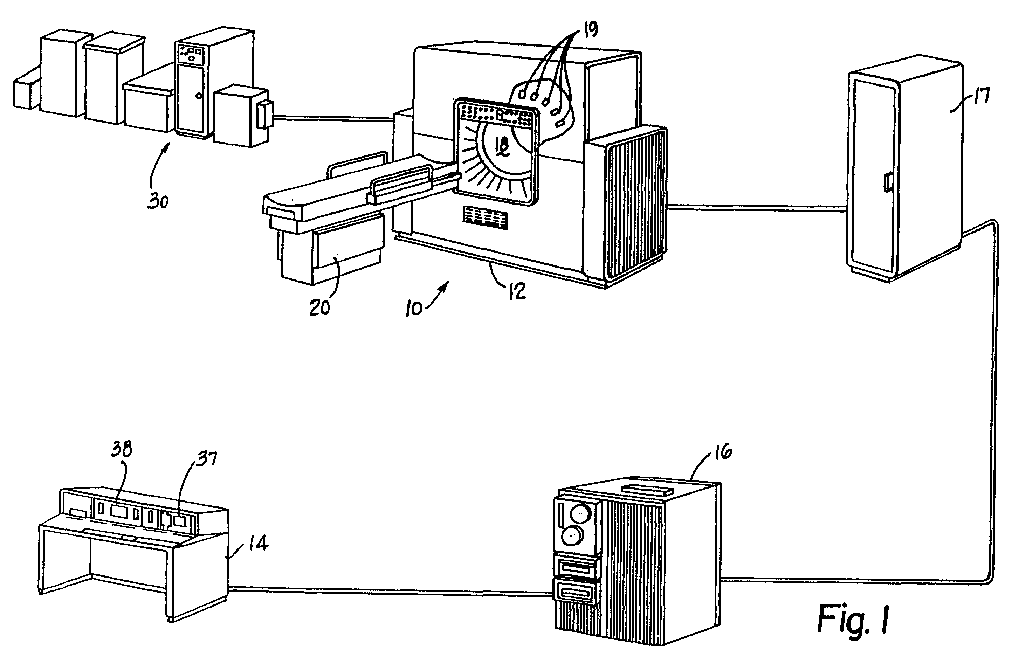

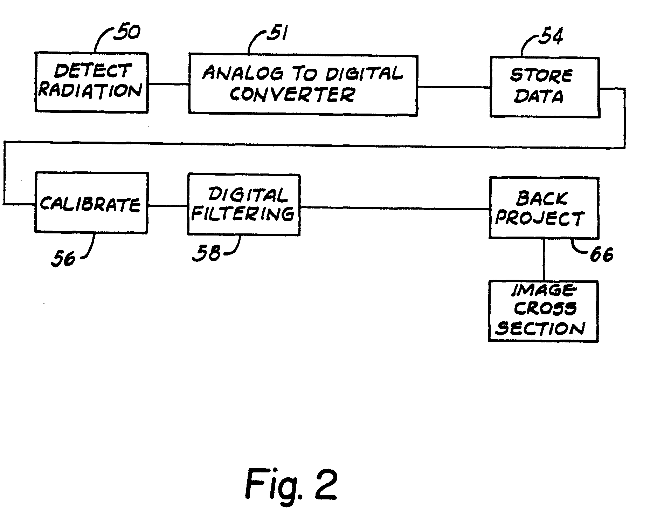

According to a second aspect of the present invention there is provided a radiation imaging system com- console 14 (figure 1).

An important purpose of this invention is the provision of improved embodiments for the detectors, having enhanced response to lower energy radiation and which reduce the noise resulting from the statistical variations of the radiation photons.

An important feature of the invention involves increasing the weighting, or detector output signal contribution of the lower energy x-ray photons relative to the weighting or signal contribution of the higher energy photons. Such a radiation detector will produce an output signal which is lower in noise and higher in information content than could be produced by prior art detectors.

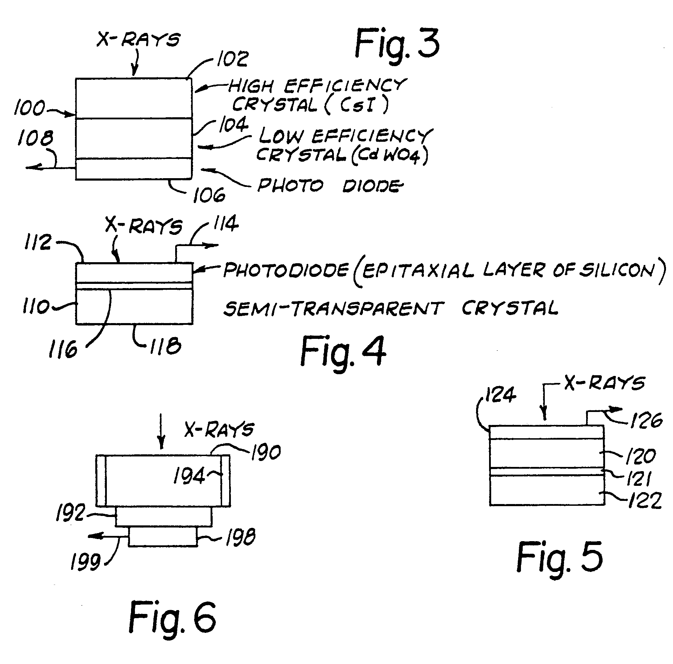

One such detector comprises a scintillator including a sandwich of two or more layers of scintillation material having different energy conversion efficiency characteristics. Referring to Figure 3, the geometry of such a detector 100 is such that radiation from the source first impinges upon a first layer 102 of scintillation material, such as cesium iodide, of thickness 0.2 mm, having a relatively high efficiency in converting x-ray photons to light photons. In the layer 102, the lower energy x-ray photons tend to be preferentially absorbed, while the higher energy photons tend to pass through the layer 102 and to be absorbed in a layer 104 which comprises a scintillation material, such as cadmium tungstate, of thickness 2.0 mm, having a relatively lower efficiency in converting x-ray photons to light photons. The interface between the layers 102, 104 is at least partially light transmissive.

The light scintillations from both the layers 102, 104 are detected by a photodiode 106, which views both layers simultaneously, and produces an analog electrical output signal on a lead 108 which is a function of the detected analog scintillations from both layers.

The net effect of this phenomenon is that the component of the analog output signal, appearing at the lead 108, which is due to the lower energy photons, has enhanced weighting relative to the contribution attributable to the higher energy x-ray photons striking the detector. That is, the signal at the lead 108 has a relatively enhanced component which comprises a contribution resultant upon the conversion to light energy of the lower energy x-ray photons, compared to the results obtained in prior art detectors having only a single crystal upstream of the photodiode in the x-ray path.

Additionally, the enhancement of the response of the output 108 due to lower energy x-ray photons renders the signal appearing at the output 108 more independent of random photon fluctuations of the incident x-ray energy than would be the case if only the lower efficiency crystal 104 were used. This is because the high and low energy components of the analog output signal at 108 are more nearly equal, for a polyenergetic spectrum, when the weighting of the lower energy contribution is enhanced.

Figure 4 shows a first detector in accordance with the present invention which achieves enhanced weighting of the detector response to the lower energy x-ray photons and includes a single relatively thick scintillator layer 110 and a single photodiode 112. The photodiode is positioned upstream in the x-ray path with respect to the crystal 110. Thus, x-rays transmitted through the subject first pass through the relatively thin photodiode 112, and are then absorbed in the crystal 110.

The lower energy x-ray photons are preferentially absorbed, and converted to light photons, in the region of the layer 110 near its upstream surface 116. The higher energy x-ray photons are converted to light photons generally more near the lower, or downstream, surface 118 of the layer 110.

Thus, the light photons resulting from the lower energy x-ray photons are preferentially converted to light scintillations nearer the photodiode 112 than are the scintillations resulting from the higher energy x-ray photons. This is true because the higher energy photons tend to penetrate further through the layer 110, before being converted to light scintillations, than do the lower energy x-ray photons. Therefore, the photodiode 112 will respond more strongly to the scintillations near the surface 116 than to those near the surface 118, due to the fact that the scintillations near the surface 116 are closer to the photodiode than those further away near the surface 118.

The photodiode 112 comprises an epitaxially grown layer of silicon. The scintillation layer 110 comprises a portion of semi-transparent crystal, for example cadmium tungstate, and has a thickness of about 2 mm. The semi-transparency of the layer 110 helps to exaggerate the attenuation of the response of the photodiode 112 to more distant scintillations occurring near the surface 118, to assist in further enhancing the weighting of the low energy response in the output signal at the lead 114.

Figure 5 shows a second detector in accordance with the present invention incorporating a sandwich crystalline layer assembly 120, 122, in combination with a photodiode 124. As in the first detector in accordance with the present invention of Figure 4 the photodiode 124 is positioned relatively upstream in the x-ray path, and receives incident x-rays prior to the crystalline layers. The incident x-rays first penetrate the photodiode 124, which is substantially transparent to x-ray, and are absorbed in the layers 120, 122. In the detector of Figure 5 the layer 120 comprises a high efficiency absorber, such as cesium iodide, of thickness 0.2 mm, which preferentially absorbs and converts to light lower energy x-ray photons. The layer 122 comprises a material having nent of said radiation.

2. A system according to Claim 1 wherein said detector assembly includes a further component (121) between said first and second scintillator components (120, 122) to reduce the response of said detector component (124) to scintillation produced in said second scintillator component (122).

3. A system according to Claim 1 or Claim 2 wherein said first scintillator component (120) comprises cesium iodide.

4. A system according to Claim 1 or Claim 2 or Claim 3 wherein said second scintillator component comprises cadmium tungstate.

5. A system according to Claim 1 or Claim 2 wherein said first (120) and second (122) scintillator components comprise cadmium tungstate and bismuth germanate respectively.

6. A system according to any one of Claims 1 to 5 wherein said first (120) and second (122) scintillator components are in the form of layers of scintillation material having thicknesses in the range 0.1 to 0.3 mm and of substantially 2.0 mms respectively.

7. A radiation imaging system comprising : a radiation source for propagating radiation along a path ; a detector assembly (19) in said radiation path for producing an analog output signal in response to said radiation, said detector assembly comprising a scintillator component (110) and a detector component (112) for producing said output signal in response to the response of said scintillator component (110) to said radiation ; and imaging circuitry (14, 16, 17) responsive to said output signal, said scintillator detector assembly component (110) comprising scintillation material and said detector component (112) comprising a detector for scintillation produced by said material, characterised in that : said scintillator component comprises a single layer of scintillation material (110) ; and said detector component (112) is disposed along said radiation path between said source and said scintillator component thereby to enhance a component of said output signal produced in response to a lower energy component of said radiation.

8. A system according to Claim 7 wherein said scintillation material comprises a material which is semitransparent to the scintillations produced by said material.

9. A system according to Claim 8 wherein said scintillation material comprises cadmium tungstate.

10. A system according to any one of Claims 1 to 9 wherein said detector component (112 or 124) is a photodiode.

11. A system according to any one of Claims 1 to 6 wherein said first and second scintillator detector assembly components (120, 122) have different geometries.

12. A system according to any one of Claims 1 to 6 or Claim 11 wherein at least one of said first and second scintillator detector assembly components (120, 122) includes a surface layer (194) of reflective material to assist in said enhancement.

13. A system according to any one of Claims 7 to 9 wherein said scintillator component (110) includes a surface layer (194) of reflective material to assist in said enhancement.

14. A system according to any one of Claims 1 to 6 or Claim 11 or Claim 12 wherein said first and second scintillator components (120, 122) and said detector component (124) are arranged in stacked closely spaced configuration.

15. A system according to any one of Claims 7 to 9 or Claim 13 wherein said scintillator component (110) and said detector component (112) are arranged in stacked closely spaced configuration.

16. A system according to any one of the preceding claims wherein the system is a computed tomography x-ray image system.

## Ansprüche

1. Strahlungsdarstellungseinrichtung, aufweisend : eine Strahlenquelle zum Aussenden von Strahlung entlang eines Pfades ; eine Detektoranordnung (19) im Strahlungspfad zum Erzeugen eines analogen Ausgangssignals ansprechend auf die Strahlung, wobei die Detektoranordnung erste und zweite Szintillatorkomponenten (120, 122), die vorzugsweise auf niedrigere bzw. höhere Energiekomponenten der Strahlung ansprechen, und eine Detektorkomponente (124) aufweist, die das Ausgangssignal ansprechend auf die Ansprechreaktionen der ersten und zweiten Szintillatorkomponenten (120, 122) auf die Strahlung erzeugt ; und eine Abbildungsschaltung (14, 16, 17), die auf das Ausgangssignal anspricht, wobei die ersten und zweiten Szintillatordetektoranordnungs-Komponenten (120, 122) Szintillationsmaterial umfassen und die Detektorkomponente (124) einen Detektor für durch dieses Material hervorgerufene Szintillation umfaßt, wobei die ersten und zweiten Szintillatordetektoranordnungs-komponenten (120, 122) entlang des Strahlungspfades seriell angeordnet sind, wobei die erste Szintillatordetektoranordnungs-komponente (120) näher an der Quelle liegt und einen höheren Photon-Lichtumsetzungswirkungsgrad als die zweite Szintillatordetektoranordnungs-komponente (122) auf-

d'images commandé par le signal de sortie, le premier et le second élément scintillateur (120, 122) de l'ensemble détecteur comprenant un matériau à scintillation et l'élément détecteur (124) comprenant un détecteur de la scintillation produite par le matériau, le premier et le second élément scintillateur (120, 122) de l'ensemble détecteur étant disposés en série le long du trajet du rayonnement, le premier élément scintillateur (120) étant plus proche de la source et ayant un plus grand rendement de conversion en lumière que le second élément scintillateur (122), l'ensemble étant caractérisé en ce que l'élément détecteur (124) est placé le long du trajet du rayonnement entre le premier élément scintillateur (120) et la source afin qu'une composante du signal de sortie, produite en fonction de la composante d'énergie relativement faible du rayonnement, soit accentuée.

2. Ensemble selon la revendication 1, dans lequel l'ensemble détecteur comporte un élément supplémentaire (121) placé entre le premier et le second élément scintillateur (120, 122) et destiné à réduire la réponse de l'élément détecteur (124) à la scintillation produite dans le second élément scintillateur (122).

3. Ensemble selon la revendication 1 ou 2, dans lequel le premier élément scintillateur (120) est formé d'iodure de césium.

4. Ensemble selon la revendication 1, 2 ou 3, dans lequel le second élément scintillateur est formé de tungstate de cadmium.

5. Ensemble selon la revendication 1 ou 2, dans lequel le premier (120) et le second (122) élément scintillateur sont respectivement formés de tungstate de cadmium et de germanate de bismuth.

6. Ensemble selon l'une quelconque des revendications 1 à 5, dans lequel le premier (120) et le second (122) élément scintillateur sont sous forme de couches d'un matériau de scintillation ayant une épaisseur comprise entre 0,1 et 0,3 mm et une épaisseur d'environ 2,0 mm respectivement.

7. Ensemble de formation d'images d'un rayonnement, comprenant une source d'un rayonnement destinée à assurer la propagation d'un rayonnement le long d'un trajet, un ensemble détecteur (19) placé sur le trajet du rayonnement et destiné à créer un signal analogique de sortie en fonction du rayonnement, l'ensemble détecteur comprenant un élément scintillateur (110) et un élément détecteur (112) destinés à créer le signal de sortie en fonction de la sensibilité de l'élément scintillateur (110) au rayonnement, et un circuit (14, 16, 17) de formation d'images commandé par le signal de sortie, l'élément scintillateur (110) de l'ensemble détecteur comprenant un matériau à scintillation et l'élément détecteur (112) comprenant un détecteur de la scintillation produite par le matériau, caractérisé en ce que l'élément scintillateur comporte une couche unique d'un matériau de scintillation (110), et l'élément détecteur (112) est placé le long du trajet du rayonnement entre la source et l'élément scintillateur afin qu'une composante du signal de sortie, produite en fonction de la composante d'énergie relativement faible du rayonnement, soit accentuée.

8. Ensemble selon la revendication 7, dans lequel le matériau à scintillation est un matériau qui est semi-transparent aux scintillations produites par ledit matériau.

9. Ensemble selon la revendication 8, dans lequel le matériau à scintillation est le tungstate de cadmium.

10. Ensemble selon l'une quelconque des revendications 1 à 9, dans lequel l'élément détecteur (112 ou 124) est une photodiode.

11. Ensemble selon l'une quelconque des revendications 1 à 6, dans lequel le premier et le second élément scintillateur (120, 122) de l'ensemble détecteur ont des configurations géométriques différentes.

12. Ensemble selon l'une quelconque des revendications 1 à 6 et 11, dans lequel l'un au moins des premier et second éléments scintillateurs (120, 122) de l'ensemble détecteur comporte une couche de surface (194) formée d'un matériau réfléchissant qui facilite ladite accentuation.

13. Ensemble selon l'une quelconque des revendications 7 à 9, dans lequel l'élément scintillateur (110) comporte une couche superficielle (194) d'un matériau réfléchissant facilitant ladite accentuation.

14. Ensemble selon l'une quelconque des revendications 1 à 6, 11 et 12, dans lequel le premier et le second élément scintillateur (120, 122) et l'élément détecteur (124) ont une configuration empilée intimement.

15. Ensemble selon l'une quelconque des revendications 7 à 9 et 13, dans lequel l'élément scintillateur (110) et l'élément détecteur (112) sont disposés avec une configuration empilée intimement.

16. Ensemble selon l'une quelconque des revendications précédentes, dans lequel l'ensemble est une installation de formation d'images radiographiques scanographiques.

Fig. I

Fig. 2

## Fig. 3

X-RAYS

102 — HIGH EFFICIENCY CRYSTAL ( CsI )

100 —

108 —

104 — LOW EFFICIENCY CRYSTAL (Cd WO4)

106 — PHOTO DIODE

X-RAYS 114

112 — PHOTODIODE (EPITAXIAL LAYER OF SILICON)

110 — SEMI-TRANSPARENT CRYSTAL

116 — 118

## Fig. 4

X-RAYS

190

194

192 —

198

199 —

## Fig. 6

124 — X-RAYS

126

120

121

122

## Fig. 5